# EUROPÄISCHE PATENTSCHRIFT

(11) **EP 3 969 334 B1**
(45) Veröffentlichungstag und Bekanntmachung des Hinweises auf die Patenterteilung: **07.06.2023**
(21) Anmeldenummer: 20726069.6
(22) Anmeldetag: 13.05.2020
(51) Int. Cl.: B60T 1/087, B60T 10/02, F16D 57/04

(54) **ANTRIEBSSTRANG MIT EINEM ABKUPPELBAREN HYDRODYNAMISCHEN RETARDER MIT WEGSENSOR**
DRIVETRAIN WITH HYDRODYNAMIC RETARDER, THE RETARDER BEING CONNECTED TO THE DRIVETRAIN WIH A RELEASABLE CLUTCH WITH A TRAVEL SENSOR
TRANSMISSION AVEC RETARDATEUR HYDRODYNAMIQUE, AVEC UN EMBRAYAGE COMPRENANT UN CAPTEUR DE DÉPLACEMENT

(30) Priorität: 16.05.2019 DE 102019112832
(43) Veröffentlichungstag der Anmeldung: 23.03.2022
(73) Patentinhaber: Voith Patent GmbH, 89522 Heidenheim (DE)
(72) Erfinder: MENNE, Achim, 74564 Crailsheim (DE); MÜLLER, Philipp, 74523 Schwäb. Gmünd (DE); LAUKEMANN, Dieter, 74586 Frankenhardt (DE); WASSERMANN, Mirco, 74544 Michelbach an der Bilz (DE)
(74) Vertreter: Voith Patent GmbH - Patentabteilung
(86) Internationale Anmeldenummer: PCT/EP2020/063338
(87) Internationale Veröffentlichungsnummer: WO 2020/229542

(56) Entgegenhaltungen:
- EP-A2- 1 251 050
- DE-A1-102013 000 239
- DE-A1-102013 021 237

## Beschreibung

Die vorliegende Erfindung betrifft einen Antriebsstrang mit einem hydrodynamischen Retarder, der mittels einer Trennkupplung abkuppelbar ist, um Leerlaufverluste im Nichtbremsbetrieb zu vermeiden.

Hydrodynamische Retarder werden in einem Antriebsstrang, beispielsweise Kraftfahrzeugantriebsstrang, insbesondere Nutzfahrzeugantriebsstrang, wie sie die vorliegende Erfindung insbesondere betrifft, verwendet, um das Kraftfahrzeug verschleißfrei hydrodynamisch abzubremsen. Hierfür weist der hydrodynamische Retarder einen um eine Drehachse umlaufenden beschaufelten Rotor und einen beschaufelten Stator auf, wobei der Stator im Sinne der vorliegenden Erfindung prinzipiell auch als Gegenlaufrotor ausgeführt sein kann, und wobei der Rotor und der Stator gemeinsam einen torusförmigen Arbeitsraum ausbilden, der mit einem Arbeitsmedium befüllbar ist, um Antriebsleistung hydrodynamisch mittels eines im Arbeitsraum ausgebildeten hydrodynamischen Arbeitsmediumkreislaufes vom Rotor auf den Stator zu übertragen. Durch diese Antriebsleistungsübertragung wird der Rotor verschleißfrei abgebremst.

Grundsätzlich ist es möglich, den Rotor des hydrodynamischen Retarders permanent angekoppelt im Antriebsstrang vorzusehen, beispielsweise angekoppelt an eine Getriebeabtriebswelle oder einen Nebenabtrieb eines Kraftfahrzeuggetriebes, und beim Übergang vom Bremsbetrieb zum Nichtbremsbetrieb den Arbeitsraum zumindest weitgehend vom Arbeitsmedium zu entleeren. Jedoch ergibt sich auch im vom Arbeitsmedium entleerten Zustand des Arbeitsraumes eine unerwünschte Drehmomentübertragung vom Rotor auf den Stator, der zu einer Verlustleistung führt. Es wurde daher vorgeschlagen, den hydrodynamischen Retarder im Nichtbremsbetreib vollständig vom Antriebsstrang, das heißt der entsprechenden Abtriebswelle des Getriebes oder auch des Motors, zu entkoppeln, indem eine Trennkupplung zwischen einem Leistungseingang, über den Antriebsleistung zu dem hydrodynamischen Retarder geführt wird, und dem Rotor des hydrodynamischen Retarders vorgesehen ist. In Abhängigkeit der Ausgestaltung einer solchen Trennkupplung kann jedoch auch diese einen unerwünschten Schleppverlust im geöffneten Zustand, das heißt in dem Zustand, in dem Retarder entkoppelt ist, erzeugen. Solche Verluste können, wie in DE 10 2012 007 732 A1 beschrieben wird, größer sein als die Verluste, die herkömmlich durch das Mitdrehen des Retarderrotors im Nichtbremsbetrieb entstehen. DE 10 2012 007 732 A1 schlägt daher einen Antriebsstrang eines Kraftfahrzeugs mit einem über eine Trennkupplung abkuppelbaren hydrodynamischen Retarder vor, wobei die Trennkupplung als synchronisierbares Schaltelement ausgeführt ist, das über wenigstens einen Synchronring und ferner ein Kegelelement verfügt, durch die ein Drehzahlunterschied zwischen der Abtriebswelle des Getriebes und der Antriebswelle des hydrodynamischen Retarders innerhalb der Synchronisierungsphase ausgeglichen wird. Ferner ist eine Sensoreinheit vorgesehen, die einen unzulässigen Betriebszustand detektiert, sodass eine Befüllung des Arbeitsraumes des Retarders abgebrochen werden kann und die Synchronisiereinrichtung des Schaltelementes zuverlässig vor Beschädigungen und unzulässig hohem Verschleiß geschützt wird. Die Sensoreinheit überwacht beispielsweise die jeweiligen Drehzahlen oder die Positionen der Getriebeabtriebswelle sowie der Retarderantriebswelle beziehungsweise die Positionierung oder den Betriebszustand der Snchronisiereinrichtun. DE102013000239A1 beschreibt auch eine Retarderbaugruppe mit einem über eine Kupplung abschaltbaren Retarder, ohne Wegsensor an der Kupplung.

Trennkupplungen, die eine Synchronisierung mit Reibelementen bewirken, unterliegen grundsätzlich einem Verschleiß. Daher muss konstruktiv eine Verschleißreserve vorgehalten werden, innerhalb der die Trennkupplung keine funktionalen Einbußen durch den Verschleiß aufweist. Wird hingegen die Verschleißreserve überschritten, so kann dies zu funktionalen Einbußen bis hin zum Totalausfall der Trennkupplung führen. Der tatsächlich auftretende Verschleiß ist dabei von der Ansteuerung der Trennkupplung, insbesondere beim Schließen der Trennkupplung, abhängig. Ein schnelles Schließen der Trennkupplung begünstigt den Verschleiß, wohingegen ein langsames Schließen der Trennkupplung ungünstig beim Zuschalten des hydrodynamischen Retarders ist, da die Bremsleistung des hydrodynamischen Retarders entsprechend verzögert zur Verfügung gestellt wird.

Der vorliegenden Erfindung liegt daher die Aufgabe zugrunde, einen Antriebsstrang mit einem abkoppelbaren hydrodynamischen Retarder anzugeben, bei dem die Zuschaltung des hydrodynamischen Retarders und der Aufbau des mit dem hydrodynamischen Retarder erzeugten Bremsmomentes einerseits rasch erfolgt und andererseits der Verschleiß in der Trennkupplung gering gehalten wird und eine lange Lebensdauer der Trennkupplung erreicht werden kann.

Die erfindungsgemäße Aufgabe wird durch einen Antriebsstrang mit den Merkmalen von Anspruch 1 gelöst. Die abhängigen Ansprüche beschreiben vorteilhafte und besonders zweckmäßige Ausgestaltungen der Erfindung. Ferner wird ein Verfahren zum Betreiben eines erfindungsgemäßen Antriebsstrangs angegeben.

Ein erfindungsgemäßer Antriebsstrang weist einen hydrodynamischen Retarder auf, der einen um eine Drehachse umlaufenden beschaufelten Rotor und einen beschaufelten Stator umfasst. Wie dargelegt, kann der Stator prinzipiell auch als Gegenlaufrotor ausgeführt sein, der in zum Rotor entgegengesetzter Drehrichtung angetrieben wird. Solche Ausführungsformen haben sich jedoch außerhalb von Schienenfahrzeugen in der Praxis nicht durchgesetzt.

Der Rotor und der Stator bilden zusammen einen Arbeitsraum zur hydrodynamischen Leistungsübertragung mittels eines Arbeitsmediumkreislaufes.

Der Antriebsstrang weist einen Leistungseingang zum Zuführen von Antriebsleistung zu dem hydrodynamischen Retarder auf. Der Leistungseingang kann beispielsweise eine Getriebeabtriebswelle, insbesondere die Hauptabtriebswelle oder eine Nebenabtriebswelle des Getriebes oder eines Antriebsmotors sein. Je nach Wahl der Welle handelt es sich bei dem Retarder um einen Primärretarder, der in Abhängigkeit der Motordrehzahl umläuft, oder um einen Sekundärretarder, der bei einem Fahrzeug in Abhängigkeit der Fahrzeuggeschwindigkeit umläuft.

Erfindungsgemäß ist eine Trennkupplung vorgesehen, die in einer Triebverbindung zwischen dem Leistungseingang und dem Rotor des hydrodynamischen Retarders positioniert ist. Die Trennkupplung ist als synchronisierte Kupplung mit zwei Kupplungshälften ausgeführt. Es sind wenigstens zwei miteinander zur Anlage bringbare Reibelemente und mechanische Sperrelemente vorgesehen. Die Reibelemente sind eingerichtet, die Drehzahl zwischen den Kupplungshälften beim Schließen der Trennkupplung anzugleichen, das heißt zu synchronisieren, und die Sperrelemente sind eingerichtet, nach einer Synchronisierung die beiden Kupplungshälften formschlüssig aneinander zu verriegeln.

Die Trennkupplung weist einen entlang eines Verschiebeweges verschiebbaren Aktuator auf, der über ein erstes anfängliches Wegstück verschiebbar, um die Reibelemente zur wechselseitigen Anlage zu bringen, und der über ein zweites, sich an das erste Wegstück anschließendes Wegstück verschiebbar ist, um die beiden Reibelemente und damit die Kupplungshälften in ihrer Drehzahl zu synchronisieren und mit den Sperrelementen formschlüssig miteinander zu verriegeln.

Erfindungsgemäß ist wenigstens ein Wegsensor vorgesehen, der den vom Aktuator zurückgelegten Verschiebeweg und/oder die Position des Aktuators auf dem Verschiebeweg direkt oder indirekt erfasst.

Gemäß einer Ausführungsform der Erfindung ist eine Steuervorrichtung vorgesehen, an welcher der wenigstens eine Wegsensor angeschlossen ist und die eingerichtet ist, den vom Wegsensor erfassten Verschiebeweg beziehungsweise die vom Wegsensor erfasste Position mit einem vorgegebenen Referenzweg beziehungsweise einer vorgegebenen Referenzposition zu vergleichen und in Abhängigkeit des Vergleichs eine Warnmeldung auszugeben und/oder ein permanentes Offenhalten oder permanentes Geschlossenhalten der Trennkupplung anzusteuern, je nachdem, ob ein zukünftiges Zuschalten des Retarders vermieden werden soll oder ob ein zukünftiges Aktivieren und Deaktivieren des Retarders nur noch durch Befüllen und Entleeren des Arbeitsraums mit dem/vom Arbeitsmedium erfolgen soll.

Gemäß einer besonders bevorzugten Ausführungsform der Erfindung ist eine Regel- oder Steuereinrichtung vorgesehen, welche ein Verschieben des Aktuators entlang des Verschiebeweges steuert oder regelt und die eingerichtet ist, die Verschiebung entlang des ersten Wegstückes mit einer ersten Betätigungskraft zu bewirken und die Verschiebung entlang des zweiten Wegstückes mit einer zweiten Betätigungskraft zu bewirken, wobei die erste Betätigungskraft kleiner als die zweite Betätigungskraft ist.

Insbesondere kann die erste Betätigungskraft über dem ersten Wegstück mit einem ersten Gradienten erhöht werden und die zweite Betätigungskraft kann über dem zweiten Wegstück mit einem zweiten Gradienten erhöht werden, wobei der erste Gradient bevorzugt kleiner als der zweite Gradient ist. Damit kann im Vergleich zu bekannten Trennkupplungen insbesondere der sogenannte Aktorik-Weg, das heißt die vom Aktuator der Trennkupplung zurückgelegte Wegstrecke (Verschiebeweg) verändert werden, der bis zur Anlage der Reibelemente, die insbesondere jeweils einen Reibbelag aufweisen, notwendig ist. Diese anfängliche Anlage der Reibelemente, das heißt die Position des Aktuators am Ende des ersten Wegstückes und zu Beginn des zweiten Wegstückes, wird auch als Kiss-Point bezeichnet. Aus der erfassten Position des Aktuators in diesem Kiss-Point beziehungsweise aus dem erfassten von einer Null-Stellung bis zu diesem Kiss-Point zurückgelegten Wegstück, das heißt das Ausmaß des ersten Wegstückes, kann der Verschleißzustand der Trennkupplung bestimmt werden. Wird eine Position oder ein Weg gemessen, der kurz vor der Verschleißreserve der Trennkupplung liegt, kann ein Signal an einen Fahrzeugrechner gesendet werden, das eine notwendige Wartung an der Trennkupplung anzeigt. Bei einem Überschreiten der Verschleißreserve kann die Trennkupplung entsprechend deaktiviert oder permanent geschlossen werden.

Bei der Aktivierung, das heißt bei dem Schließen der Trennkupplung, kann der Kiss-Point, das heißt das Ende des ersten Wegstückes, mittels der Regel- oder Steuervorrichtung vorteilhaft nur bis zu einer vorbestimmten Geschwindigkeit beziehungsweise einer vorbestimmten Betätigungskraft angefahren werden. Bevorzugt erfolgt daher im Anschluss das weitere Verfahren des Aktuators über das zweite Wegstück mit einem höheren Kraftgradienten und/oder mit einer höheren Kraft. Für das Umschalten der Regelung oder Steuerung am Ende des ersten Wegstückes und zu Beginn des zweiten Wegstückes, also im Kiss-Point, ist es günstig, die genaue Lage dieses Übergangspunktes zu erfassen, und zwar auch dann, wenn sich dieser Punkt durch Verschleiß der Trennkupplung verschiebt. Die erfindungsgemäße Steuervorrichtung kann eingerichtet sein, diesen Übergangspunkt zu erfassen und zu hinterlegen und entsprechend bei zukünftigen Zuschaltvorgängen der Trennkupplung den hinterlegten Übergangspunkt zu berücksichtigen. Die Erfassung des Übergangspunktes kann beispielsweise durch Erfassen der Drehzahl der beiden Kupplungshälften oder eines Drehzahlverhältnisses zwischen den beiden Kupplungshälften erfolgen und/oder durch Erfassen eines an der ersten Kupplungshälfte und/oder der zweiten Kupplungshälfte anliegenden Drehmomentes. Die Erfassung kann jeweils wiederum direkt oder indirekt erfolgen.

Der Wegsensor kann vorteilhaft erfassen, ob und/oder wann eine formschlüssige Verriegelung der beiden Kupplungshälften erreicht wurde, das heißt ob und/oder wann die Sperrelemente die beiden Kupplungshälften formschlüssige aneinander verriegelt haben. Der Wegsensor kann hierfür ein entsprechendes Signal liefern.

Die Erfassung des Formschlusses kann das Ende des Ankuppelns beziehungsweise des Zuschaltvorganges anzeigen. Ab diesem Zeitpunkt ist die Trennkupplung in der Lage, das volle vom hydrodynamischen Retarder bereitstellbare Bremsmoment zu übertragen. Somit kann ab diesem Zeitpunkt der Retarder mit dem Arbeitsmedium (weiter) befüllt werden, um ein entsprechendes Bremsmoment aufzubauen.

Besonders vorteilhaft wird, wenn der Formschluss nicht innerhalb eines definierten Zeitabschnittes ab Beginn der Aktivierung, das heißt ab Beginn des Schließens der Trennkupplung, festgestellt wird, ein Fehlerfall festgestellt und die Aktivierung, das heißt das Schließen der Trennkupplung kann abgebrochen werden. Insbesondere wird zumindest bei der wiederholten Feststellung eines Fehlerfalles eine zukünftige Aktivierung der Trennkupplung unterbunden. Die Ausgabe einer entsprechenden Warnmeldung bei Feststellen des Fehlerfalles beziehungsweise bei wiederholtem Feststellen des Fehlerfalles ist möglich.

Gemäß einem Ausführungsbeispiel eines erfindungsgemäßen Verfahrens wird mit dem Wegsensor der zurückgelegte Verschiebeweg, insbesondere ausgehend von einem vorgegebenen Nullpunkt, und/oder die aktuelle Position des Aktuators direkt oder indirekt erfasst und zur Bestimmung eines Verschleißzustandes der Trennkupplung herangezogen und/oder es wird eine Verschiebung des Aktuators entlang des Verschiebeweges in Abhängigkeit der aktuellen Position mit variierender Betätigungskraft bewirkt. Die aktuelle Position kann dabei mit dem Wegsensor unmittelbar erfasst werden oder aus dem mit dem Wegsensor erfassten zurückgelegten Verschiebeweg bestimmt werden, wobei beides als direkte Erfassung mit dem Wegsensor zu verstehen ist, im Unterschied zu einer indirekten Erfassung mit Messwerten aus anderen Sensoren.

Bei dem erfindungsgemäßen Verfahren kann bevorzugt die Verschiebung des Aktuators entlang des ersten Wegstückes mit einer vergleichsweise kleineren Betätigungskraft und/oder einem vergleichsweise kleineren Betätigungskraftgradienten bewirkt werden als die Verschiebung des Aktuators entlang des zweiten Wegstückes.

Die Erfindung soll nachfolgend anhand eines Ausführungsbeispiels und den Figuren exemplarisch beschrieben werden.

Es zeigen:
- Figur 1: eine schematische Darstellung eines erfindungsgemäßen Antriebsstrangs;
- Figur 2: eine schematische Darstellung einer erfindungsgemäßen Trennkupplung mit Aktuator;
- Figur 3: ein Weg-Zeit-Diagramm, nachdem die Regel- oder Steuereinrichtung für die Trennkupplung bevorzugt arbeitet.

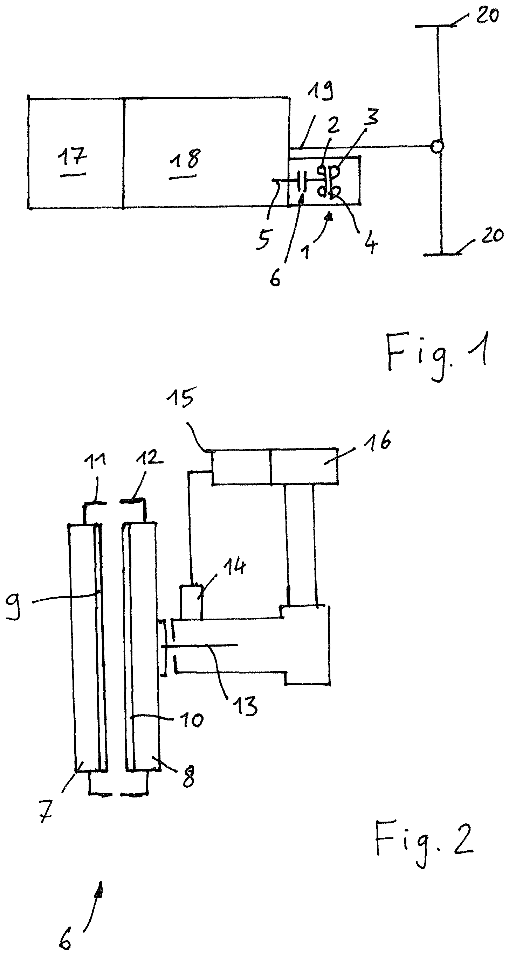

In der Figur 1 ist schematisch ein Antriebsstrang beispielsweise eines Nutzfahrzeugs gezeigt, mit einem Antriebsmotor 17 und einem vom Antriebsmotor 17 angetriebenen Getriebe 18, das eine Getriebeabtriebswelle 19 aufweist, über welche Antriebsräder 20 angetrieben werden. Eine Nebenabtriebswelle des Getriebes 18 bildet einen Leistungseingang 5 für einen hydrodynamischen Retarder 1, der einen Rotor 2 und einen Stator 3 aufweist, die gemeinsam einen torusförmigen Arbeitsraum 4 ausbilden.

In der Triebverbindung zwischen dem Leistungseingang 5 und dem Rotor 2 des hydrodynamischen Retarders 1 ist eine Trennkupplung 6 vorgesehen, um den hydrodynamischen Retarder 1 vollständig vom Antriebsleistungsfluss abzukoppeln und somit Leerlaufverluste zu vermeiden.

Im geschlossenen Zustand der Trennkupplung 6 wird der Rotor 2 über das Getriebe 18 um eine Drehachse umlaufend angetrieben, wohingegen er im geöffneten Zustand der Trennkupplung 6 stillsteht.

Wie sehr schematisch in der Figur 2 dargestellt ist, weist die Trennkupplung 6 zwei Kupplungshälften 7, 8 auf, die im geöffneten Zustand der Trennkupplung 6 mit verschiedenen Drehzahlen zueinander umlaufen können beziehungsweise von denen eine im geöffneten Zustand der Trennkupplung 6 stillstehen kann und die andere umlaufen kann. Jede Kupplungshälfte weist wenigstens ein Reibelement 9, 10 auf. Ferner sind Sperrelemente 11, 12 vorgesehen, mit denen die beiden Kupplungshälften 7, 8 im geschlossenen Zustand der Trennkupplung 6 formschlüssig miteinander verriegelt werden können.

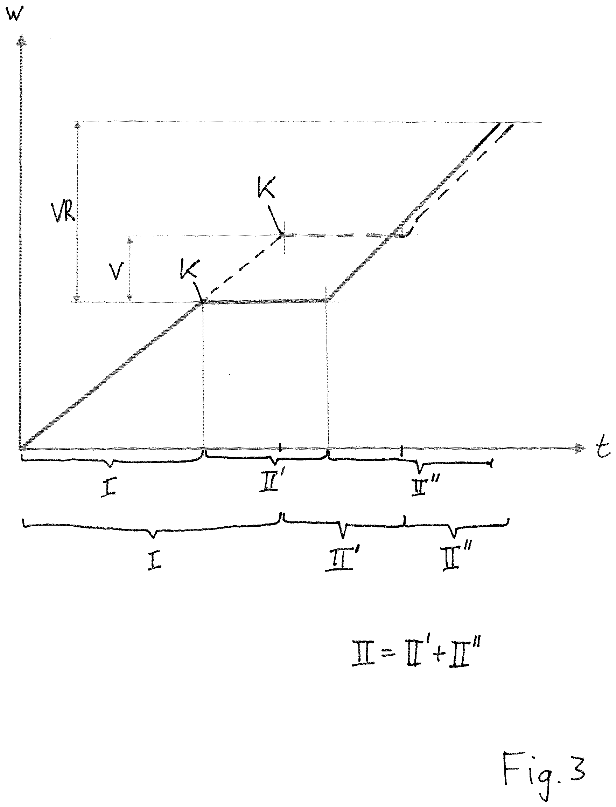

Zum Öffnen und Schließen der Trennkupplung 6 ist ein Aktuator 13 vorgesehen, der ausgehend von einer Nullstellung zunächst ein erstes Wegstück I und anschließend ein zweites Wegstück II zurücklegt, wobei dies nachfolgend noch anhand der Figur 3 erläutert wird. Wenn der Aktuator 13 ausgehend von der Nulllage das erste anfängliche Wegstück I zurückgelegt hat, gelangen die Reibelemente 9, 10 in eine gegenseitige Anlage, die Trennkupplung 6 befindet sich im sogenannten Kiss-Point. Wenn der Aktuator 13 dann weiter verschoben wird, erfolgt die Synchronisierung der beiden Kupplungshälften 7, 8 und das formschlüssige Schließen der Trennkupplung 6 mit den Sperrelementen 11, 12.

Es ist ein Wegsensor 14 vorgesehen, der den vom Aktuator 13 zurückgelegten Verschiebeweg w und/oder die Position des Aktuators 13 auf dem Verschiebeweg w erfasst. Der Wegsensor 14 ist an einer Steuervorrichtung 15 angeschlossen, die zusätzlich zu der Regel- oder Steuereinrichtung 16 oder integral mit dieser ausgeführt sein kann. Das heißt, eine gemeinsame Vorrichtung kann die Funktion der Steuervorrichtung 15 und die Funktion der Regel- oder Steuereinrichtung 16 übernehmen.

Der vom Wegsensor 14 erfasste Weg kann auch die Verschiebung einer Schiebemuffe sein, an der der Aktuator positioniert ist, so dass der tatsächlich zurückgelegte Weg der Schiebemuffe aufgenommen wird. Allgemein beschrieben kann über den Weg des Aktuators der Weg der Schiebemuffe indirekt bestimmt werden.

In Abhängigkeit der vom Wegsensor 14 erfassten Position des Aktuators 13 beziehungsweise in Abhängigkeit des erfassten vom Aktuator 13 zurückgelegten Verschiebeweges w steuert die Steuervorrichtung 15 die Ausgabe einer Warnmeldung an und/oder ein permanentes Offenhalten oder Geschlossenhalten der Trennkupplung 6, wenn nämlich in einem von der Steuervorrichtung 15 durchgeführten Vergleich festgestellt wird, dass der erfasste Verschiebeweg w und/oder die erfasste Position von einem vorgegebenen Referenzwert und/oder einer vorgegebenen Referenzposition abweicht, was bedeutet, dass eine ordnungsgemäße Funktion der Trennkupplung 6 zumindest gefährdet ist.

Die Regel- oder Steuereinrichtung 16 steuert die Verschiebung des Aktuators 13 über einen entsprechenden Aktuatorantrieb an, und zwar bevorzugt derart, dass die Verschiebung entlang des ersten Wegstückes I mit einer ersten Betätigungskraft erfolgt und die Verschiebung entlang des zweiten Wegstückes II mit einer zweiten Betätigungskraft erfolgt, die von der ersten Betätigungskraft abweicht, wobei die erste Betätigungskraft insbesondere kleiner als die zweite Betätigungskraft ist.

In der Figur 3 ist exemplarisch ein Weg-Zeit-Diagramm für den Aktuator 13 (siehe die Figur 2) dargestellt. Die Zeit t bei der Verschiebung des Aktuators 13 ist als Abszisse dargestellt, der Verschiebeweg w als Ordinate.

Bei einem Schließvorgang der Trennkupplung 6 (siehe die Figur 2) wird der Aktuator 13 ausgehend von einem Nullpunkt über das erste anfängliche Wegstück I verschoben, bis die Trennkupplung 6 den Kiss-Point erreicht. Wie man sieht, variiert dabei die Länge des ersten Wegstückes I über der Lebensdauer der Trennkupplung 6. Mit zunehmendem Verschleiß der Reibelemente 9, 10 wird das erste Wegstück I vergrößert. Dies ist in gestrichelter Linie in der Figur 3 dargestellt. Mit V ist ferner der aktuelle Verschleiß bezeichnet und mit VR die sogenannte Verschleißreserve. Der Kiss-Point ist mit K bezeichnet, einmal in einem Neuzustand der Trennkupplung 6 und einmal nach einem gewissen Verschleiß der Trennkupplung 6.

Wenn der Aktuator 13 das Wegstück I zurückgelegt hat und weiter verschoben wird, legt er das zweite Wegstück II zurück, über welchem die Synchronisierung (II') und das formschlüssige Verriegeln (II") der Trennkupplung 6 erfolgt. Die Abschnitte II' und II" können sich somit unmittelbar aneinander anschließen, jedoch auch zumindest teilweise überlappen.

Über dem ersten Wegstück I kann der Aktuator 13, wie dargelegt, mit einer anderen Kraft angesteuert werden, im Vergleich zur Ansteuerung über dem zweiten Wegstück II.

### Bezugszeichenliste

- 1: hydrodynamischer Retarder
- 2: Rotor
- 3: Stator
- 4: Arbeitsraum
- 5: Leistungseingang
- 6: Trennkupplung
- 7: Kupplungshälfte
- 8: Kupplungshälfte
- 9: Reibelement
- 10: Reibelement
- 11: Sperrelement
- 12: Sperrelement
- 13: Aktuator
- 14: Wegsensor
- 15: Steuervorrichtung
- 16: Regel- oder Steuereinrichtung
- 17: Antriebsmotor
- 18: Getriebe
- 19: Getriebeabtriebswelle
- 20: Antriebsräder
- w: Verschiebeweg
- t: Zeit
- V: Verschleiß
- VR: Verschleißreserve
- K: Kiss-Point
- I: erstes Wegstück
- II: zweites Wegstück

## Patentansprüche

1. Antriebsstrang mit einem hydrodynamischen Retarder (1), der einen um eine Drehachse umlaufenden beschaufelten Rotor (2) und einen beschaufelten Stator (3) umfasst, der zusammen mit dem Rotor (2) einen Arbeitsraum (4) zur hydrodynamischen Leistungsübertragung vom Rotor (2) auf den Stator (3) ausbildet;
mit einem Leistungseingang (5) zum Zuführen von Antriebsleistung zu dem hydrodynamischen Retarder (1);
mit einer Trennkupplung (6) in einer Triebverbindung zwischen dem Leistungseingang (5) und dem Rotor (2) des hydrodynamischen Retarders (1);
wobei die Trennkupplung (6) als synchronisierte Kupplung mit zwei Kupplungshälften (7, 8) und mit miteinander zur Anlage bringbaren Reibelementen (9, 10) und mit mechanischen Sperrelementen (11, 12) ausgeführt ist, die Reibelemente (9, 10) eingerichtet sind, die Drehzahl zwischen den Kupplungshälften (7, 8) anzugleichen und die Sperrelemente (11, 12) eingerichtet sind, die beiden Kupplungshälften (7, 8) formschlüssig aneinander zu verriegeln; und
wobei die Trennkupplung (6) einen entlang eines Verschiebeweges (w) verschiebbaren Aktuator (13) umfasst, der über ein erstes anfängliches Wegstück (I) verschiebbar ist, um die Reibelemente (9, 10) zur wechselseitigen Anlage zu bringen, und der über ein zweites, sich an das erste Wegstück (I) anschließendes Wegstück (II) verschiebbar ist, um die beiden Reibelemente (9, 10) und damit die Kupplungshälften (7, 8) in ihrer Drehzahl zu synchronisieren und mit den Sperrelementen (11, 12) miteinander zu verriegeln;
**dadurch gekennzeichnet, dass**
wenigstens ein Wegsensor (14) vorgesehen ist, der den vom Aktuator (13) zurückgelegten Verschiebeweg (w) und/oder die Position des Aktuators (13) auf dem Verschiebeweg (w) direkt oder indirekt erfasst.

2. Antriebsstrang gemäß Anspruch 1, **dadurch gekennzeichnet, dass** eine Steuervorrichtung (15) vorgesehen ist, an welcher der wenigstes eine Wegsensor (14) angeschlossen ist und die eingerichtet ist, den vom Wegsensor (14) erfassten Verschiebeweg (w) und/oder die erfasste Position mit einem vorgegebenen Referenzweg und/oder einer vorgegebenen Referenzposition zu vergleichen und in Abhängigkeit des Vergleichs eine Warnmeldung auszugeben und/oder ein permanentes Offenhalten oder Geschlossenhalten der Trennkupplung (6) anzusteuern.

3. Antriebsstrang gemäß einem der Ansprüche 1 oder 2, **dadurch gekennzeichnet, dass** eine Regel- oder Steuereinrichtung (16) vorgesehen ist, welche ein Verschieben des Aktuators (13) entlang des Verschiebeweges (w) steuert oder regelt und eingerichtet ist, die Verschiebung entlang des ersten Wegstückes (I) mit einer ersten Betätigungskraft zu bewirken und die Verschiebung entlang des zweiten Wegstückes (II) mit einer zweiten Betätigungskraft zu bewirken, wobei die erste Betätigungskraft kleiner als die zweite Betätigungskraft ist.

4. Antriebsstrang gemäß Anspruch 3, **dadurch gekennzeichnet, dass** die erste Betätigungskraft mit einem ersten Gradienten erhöht wird und die zweite Betätigungskraft mit einem zweiten Gradienten erhöht wird und der erste Gradient kleiner als der zweite Gradient ist.

5. Verfahren zum Betreiben eines Antriebsstrangs gemäß einem der Ansprüche 1 bis 4, **dadurch gekennzeichnet, dass** mit dem Wegsensor (14) der zurückgelegte Verschiebeweg (w) und/oder die aktuelle Position des Aktuators (13) auf dem Verschiebeweg (w) direkt oder indirekt erfasst wird und zur Bestimmung eines Verschleißzustandes der Trennkupplung (6) herangezogen wird.

6. Verfahren zum Betreiben eines Antriebsstrangs gemäß einem der Ansprüche 1 bis 4, **dadurch gekennzeichnet, dass** mit dem Wegsensor (14) die aktuelle Position des Aktuators (13) auf dem Verschiebeweg (w) erfasst wird und eine Verschiebung des Aktuators (13) entlang des Verschiebeweges (w) in Abhängigkeit der erfassten aktuellen Position mit variierender Betätigungskraft bewirkt wird.

7. Verfahren zum Betreiben eines Antriebsstrangs gemäß einem der Ansprüche 1 bis 4 mit den Schritten gemäß Anspruch 5 und Anspruch 6.

8. Verfahren gemäß einem der Ansprüche 6 oder 7, **dadurch gekennzeichnet, dass** die Verschiebung des Aktuators (13) entlang des ersten Wegstückes (I) mit einer kleineren Betätigungskraft und/oder einem kleineren Betätigungskraftgradienten bewirkt wird als die Verschiebung des Aktuators (13) entlang des zweiten Wegstückes (II).

9. Verfahren gemäß einem der Ansprüche 6 bis 8, **dadurch gekennzeichnet, dass** mit dem Wegsensor (14) eine formschlüssige Verriegelung der beiden Kupplungshälften (7, 8) mit den Sperrelementen (11, 12) anhand des zurückgelegten Verschiebeweges (w) erfasst wird.

10. Verfahren gemäß Anspruch 9, **dadurch gekennzeichnet, dass** erst nach dem Erfassen der Verriegelung der Arbeitsraum (4) des hydrodynamischen Retarders (1) zunehmend mit Arbeitsmedium befüllt wird.

## Claims

1. Drivetrain having a hydrodynamic retarder (1) which comprises a bladed rotor (2) rotating about an axis of rotation and a bladed stator (3) which, together with the rotor (2), forms a working chamber (4) for the hydrodynamic transmission of power from the rotor (2) to the stator (3);
having a power input (5) for supplying drive power to the hydrodynamic retarder (1);
having a separating clutch (6) in a drive connection between the power input (5) and the rotor (2) of the hydrodynamic retarder (1);
wherein the separating clutch (6) is designed as a synchronized clutch with two clutch halves (7, 8) and with friction elements (9, 10) that can be brought into contact with one another and with mechanical blocking elements (11, 12), the friction elements (9, 10) are configured to equalize the rotational speed between the coupling halves (7, 8), and the blocking elements (11, 12) are configured to positively lock the two coupling halves (7, 8) to one another; and
wherein the separating clutch (6) comprises an actuator (13), displaceable along a displacement travel (w), which can be displaced over a first initial distance (I) in order to bring the friction elements (9, 10) into mutual contact and which can be displaced over a second distance (II) that follows the first distance (I) in order to synchronize the rotational speed of the two friction elements (9, 10) and thus of the coupling halves (7, 8) and to lock them to one another by means of the blocking elements (11, 12);
**characterized in that**
at least one travel sensor (14) is provided which directly or indirectly detects the displacement travel (w) covered by the actuator (13) and/or the position of the actuator (13) on the displacement travel (w).

2. Drivetrain according to Claim 1, **characterized in that** a control device (15) is provided, to which the at least one travel sensor (14) is connected and which is configured to compare the displacement travel (w) detected by the travel sensor (14) and/or the detected position with a predefined reference travel and/or a predefined reference position and, depending on the comparison, to output a warning message and/or to trigger a situation in which the separating clutch (6) is permanently held open or held closed.

3. Drivetrain according to either of Claims 1 and 2, **characterized in that** a closed-loop or open-loop control device (16) is provided which provides closed-loop or open-loop control of a displacement of the actuator (13) along the displacement travel (w) and is configured to bring about the displacement along the first distance (I) with a first actuating force and to bring about the displacement along the second distance (II) with a second actuating force, wherein the first actuating force is smaller than the second actuating force.

4. Drivetrain according to Claim 3, **characterized in that** the first actuating force is increased with a first gradient and the second actuating force is increased with a second gradient, and the first gradient is smaller than the second gradient.

5. Method for operating a drivetrain according to one of Claims 1 to 4, **characterized in that** the displacement travel (w) covered and/or the current position of the actuator (13) on the displacement travel (w) is detected directly or indirectly by the travel sensor (14) and is used to determine a state of wear of the separating clutch (6).

6. Method for operating a drivetrain according to one of Claims 1 to 4, **characterized in that** the current position of the actuator (13) on the displacement travel (w) is detected by the travel sensor (14) and a displacement of the actuator (13) along the displacement travel (w) as a function of the detected current position is brought about with a varying actuation force.

7. Method for operating a drivetrain according to one of Claims 1 to 4, having the steps according to Claim 5 and Claim 6.

8. Method according to either of Claims 6 and 7, **characterized in that** the displacement of the actuator (13) along the first distance (I) is brought about with a smaller actuating force and/or a smaller actuating-force gradient than the displacement of the actuator (13) along the second distance (II).

9. Method according to one of Claims 6 to 8, **characterized in that** the travel sensor (14) detects a positive locking of the two clutch halves (7, 8) by means of the blocking elements (11, 12) on the basis of the covered displacement travel (w).

10. Method according to Claim 9, **characterized in that** the working chamber (4) of the hydrodynamic retarder (1) is increasingly filled with working medium only after the locking has been detected.

## Revendications

1. Chaîne d'entraînement muni
d'un ralentisseur hydrodynamique (1) qui comprend un rotor à aubes (2) tournant sur un axe de rotation et un stator à aubes (3) qui forme conjointement avec le rotor (2) une chambre de travail (4) destinée à la transmission de puissance hydrodynamique du rotor (2) au stator (3) ;
d'une entrée de puissance (5) destinée à fournir une puissance d'entraînement au ralentisseur hydrodynamique (1) ;
d'un embrayage de séparation (6) situé dans une liaison d'entraînement entre l'entrée de puissance (5) et le rotor (2) du ralentisseur hydrodynamique (1) ;
l'embrayage de séparation (6) étant conçu comme un embrayage synchronisé pourvu de deux moitiés d'embrayage (7, 8) et d'éléments de friction (9, 10) pouvant être mis en contact l'un avec l'autre et d'éléments de blocage mécaniques (11, 12), les éléments de friction (9, 10) étant conçus pour égaliser la vitesse entre les moitiés d'embrayage (7, 8) et les éléments de blocage (11, 12) étant conçus pour verrouiller les deux moitiés d'embrayage (7, 8) l'une à l'autre par complémentarité de formes ; et
l'embrayage de séparation (6) comprenant un actionneur (13) qui peut coulisser le long d'un chemin de coulissement (w) et qui peut coulisser sur une première partie de chemin initiale (I) afin d'amener les éléments de friction (9, 10) en contact mutuel et qui peut coulisser sur une deuxième partie de chemin (II), faisant suite à la première partie de chemin (1), afin de synchroniser la vitesse de rotation des deux éléments de friction (9, 10) et ainsi les moitiés d'embrayage (7, 8) et verrouiller ceux-ci aux éléments de blocage (11, 12) ;
**caractérisée en ce que**
au moins un capteur de déplacement (14) est prévu qui détecte directement ou indirectement le chemin de coulissement (w) parcourue par l'actionneur (13) et/ou la position de l'actionneur (13) sur le chemin de coulissement (w).

2. Chaîne d'entraînement selon la revendication 1, **caractérisée en ce qu'**un dispositif de commande (15) est prévu auquel l'au moins un capteur de déplacement (14) est raccordé et qui est conçu pour comparer le chemin de coulissement (w) détecté par le capteur de déplacement (14) et/ou la position détectée à un chemin de référence spécifié et/ou à une position de référence spécifiée et, en fonction de la comparaison, pour délivrer un message d'avertissement et/ou pour commander l'embrayage de séparation (6) de manière à ce qu'il soit maintenu ouvert ou fermé en permanence.

3. Chaîne d'entraînement selon l'une des revendications 1 ou 2, **caractérisée en ce qu'**un dispositif de régulation ou de commande (16) est prévu qui commande ou régule un coulissement de l'actionneur (13) le long du chemin de coulissement (w) et est conçu pour provoquer le coulissement le long de la première partie de chemin (I) avec une première force d'actionnement et le coulissement le long de la deuxième partie de chemin (II) avec une deuxième force d'actionnement, la première force d'actionnement étant inférieure à la deuxième force d'actionnement.

4. Chaîne d'entraînement selon la revendication 3, **caractérisée en ce que** la première force d'actionnement est augmentée avec un premier gradient et la deuxième force d'actionnement est augmentée avec un deuxième gradient, et le premier gradient étant inférieur au deuxième gradient.

5. Procédé de fonctionnement d'une chaîne d'entraînement selon l'une des revendications 1 à 4, **caractérisé en ce que** le capteur de déplacement (14) permet de détecter directement ou indirectement le chemin de coulissement (w) parcouru et/ou la position actuelle de l'actionneur (13) sur le chemin de coulissement (w), lesquels sont utilisés pour déterminer un état d'usure de l'embrayage de séparation (6) .

6. Procédé de fonctionnement d'une chaîne d'entraînement selon l'une des revendications 1 à 4, **caractérisé en ce que** le capteur de déplacement (14) permet de détecter la position actuelle de l'actionneur (13) sur le chemin de coulissement (w) et un coulissement de l'actionneur (13) le long du chemin de coulissement (w) est provoqué avec une force d'actionnement variable en fonction de la position actuelle détectée.

7. Procédé de fonctionnement d'une chaîne d'entraînement selon l'une des revendications 1 à 4, ledit procédé comprenant les étapes selon la revendication 5 et la revendication 6.

8. Procédé selon l'une des revendication 6 ou 7, **caractérisé en ce que** le coulissement de l'actionneur (13) le long de la première partie de chemin (I) est effectué avec une moindre force d'actionnement et/ou un moindre gradient de force d'actionnement que le coulissement de l'actionneur. (13) le long de la deuxième partie de chemin (II).

9. Procédé selon l'une des revendications 6 à 8, **caractérisé en ce que** le capteur de déplacement (14) permet de détecter un verrouillage par complémentarité de formes des deux moitiés d'embrayage (7, 8) avec les éléments de blocage (11, 12) sur la base du chemin de coulissement (w) parcouru.

10. Procédé selon la revendication 9, **caractérisé en ce que** la chambre de travail (4) du ralentisseur hydrodynamique (1) est de plus en plus remplie de milieu de travail seulement après que le verrouillage a été détecté.
